# EUROPEAN PATENT SPECIFICATION

(11) **EP 1 671 816 B1**
(45) Date of publication and mention of the grant of the patent: **09.09.2009**
(21) Application number: 05102501.3
(22) Date of filing: 30.03.2005
(51) Int. Cl.: B60C 23/00, F16C 19/00, F16L 27/087

(54) **A bearing unit for the hub of a motor vehicle wheel**
Radlagereinheit für die Nabe eines Kraftfahrzeugrads
Unité de roulement pour un moyeu d'une roue de véhicule

(30) Priority: 15.12.2004 IT TO20040877
(43) Date of publication of application: 21.06.2006
(73) Proprietor: Aktiebolaget SKF, 415 50 Göteborg (SE)
(72) Inventor: Vignotto, Angelo, 10134 Torino (IT); Savarese, Claudio, 10060 Airasca (Torino) (IT); Le Reun, Patrick, 10090 Buttigliera Alta (Torino) (IT)
(74) Representative: Fioravanti, Corrado

(56) References cited:
- US-A- 5 503 480

## Description

The present invention refers to a bearing unit for the hub of a motor vehicle wheel.

There are known bearing units for a vehicle wheel hub provided with special vents and sealing devices for inflating into the tire air pressurized by means of a source of pressurized air mounted on board of the vehicle. These solutions allow to adjust and/or monitor the air pressure in the tires.

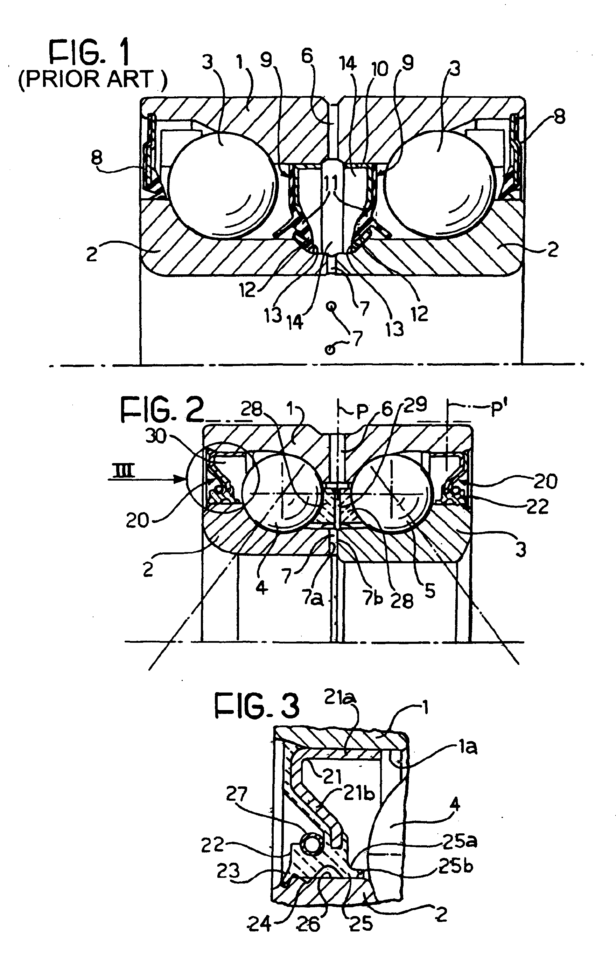

For a better understanding of the state of the art and problems inherent thereto, there will be at first described a bearing unit of the above mentioned type, with reference to figure 1 of the accompanying drawings. A bearing unit according to the preamble of claim 1, is known, for example, from EP-B-713021, EP-A-656267, US-5503480, DE-3738529, FR-2714943.

In figure 1, a bearing unit comprises an outer race 1, an inner race 2 formed by two axially adjacent half-races, and two sets of bearing balls 3. In a radial plane located between the two sets of balls 3 there are several outer radial ducts 6 passing through the bearing outer race 1, and several inner radial passages 7 formed through the bearing inner race 2.

Mounted in the annular space defined by the outer race 1, the inner race 2 and the two sets of balls 3 are two sealing devices 9 that allow pressurized air to pass through the outer 6 and inner 7 ducts of the bearing. The two annular sealing devices are facing one another axially and disposed symmetrically with respect to the radial plane in which the ducts 6 and 7 of the bearing unit lie. Each sealing device 9 generally comprises a metal reinforcement on which a flexible material is co-moulded, such as an elastomeric material. The metal reinforcement is formed by a sheet metal bent so as to have a portion 10 that is axially fixed to the outer race 1 of the bearing and a radial portion for stiffening the flexible material moulded thereon that extends to form a flexible wall 11. The free end of the wall 11 constitutes an airtight sealing lip 12 that slidingly contacts a contact surface 13 formed by the inner race 2 of the bearing. The two sealing devices 9 so arranged delimit an intermediate annular chamber 14. Air pressurized by a pressurized air source mounted on board of the vehicle, which may be part of an automatic system or a system controlled by the driver, passes through special ducts obtained in the suspension standard of the wheel where the bearing is housed, passes through the outer ducts 6, in the intermediate annular chamber 14, through the inner ducts 7, and from here is conveyed through other ducts to the wheel rim and finally the tire.

The bearing unit is further provided with other conventional sealing devices 8 mounted at the axially opposite ends of the bearing, for hermetically sealing the annular gap between the bearing races.

Bearing units of this kind are axially longer as compared to conventional bearing units for mounting on wheel hubs of vehicles lacking an on-board system for adjusting tire pressure. This requires a re-design of both the hub (not shown) and the suspension standard (not shown) in order to apply a bearing unit of the above described type (known in the field as "air bearings").

The object of the present invention is to provide an axially compact bearing unit capable of being indifferently applied both to vehicles equipped with a pressure control system and to vehicles lacking such systems.

This and other objects and advantages, that will be better understood in the following, are accomplished according to the invention by a device and a bearing assembly having the features defined in the appended claims.

There will now be described the constructional and functional features of a preferred but not limiting embodiment of the invention. Reference is made to the accompanying drawings, in which:
figure 1 is an axial cross-sectional view of a bearing unit of known kind;
figure 2 is a schematic, partial cross-sectional view of a bearing unit according to the invention; and
figure 3 is an enlarged view of a detail indicated III in figure 2.

Referring to figure 2, a bearing unit for the hub of a motor vehicle wheel comprises a stationary outer race 1, a pair of rotatable, axially adjacent inner races 2 and 3, and two sets of rolling elements 4, 5, in this example balls, radially interposed between the outer race 1 and the inner races 2, 3.

The bearing unit shown herein is a standard unit of the so called I generation. However, reference to this possible field of application should not be in any way interpreted as limiting the scope of the patent, as the invention is equally applicable to bearing units with flanged races.

In order to establish air communication between the suspension standard (not shown), in which the outer race 1 is to be fitted, and the rotating hub (not shown) on which the inner races 2, 3 are to be mounted, the bearing unit forms one or more outer radial channels 6 for the passage of pressurized air through the outer race 1 and one or more inner radial channels 7 for the passage of pressurized air through the inner races 2, 3. Preferably, the inner channels 7 are defined by radial grooves 7a formed in one or both of the inner races. In the example of figure 2, the radial grooves 7a are formed only in the race 2 on its side facing the centre of the bearing and contacting the side 7b of the adjacent inner race 3.

According to the present invention, two sealing devices 20 are fitted at the opposite axial ends of the bearing for delimiting laterally and hermetically sealing the annular space or chamber 30 between the bearing races. As will be explained in detail herein after, the sealing devices 20 serve to
- prevent external contaminating agents (water, dust, mud) from entering the inner parts of the bearing;
- prevent the lubricant grease normally contained within the inside of the bearing for lubricating the rolling surfaces from leaking out; and, optionally
- confine laterally and convey pressurized air flowing through the inner 6 and outer 7 passages and the annular chamber 30, in case the bearing unit is fitted onto a vehicle equipped with an on-board system supplying pressurized air to the tires through the wheel hubs.
   Referring also to figure 3, each sealing device 20 comprises a metallic annular shield 21 to which a sealing gasket 22 of rubber or elastomeric material is fixed by vulcanization. The sealing gasket 22 has sealing lips 23, 24, 25 for engaging and slidingly contacting a surface 26 secured to or integral with one of the rotatable inner races 2, 3 of the bearing unit.
   The shield 21 forms a radially outer, tubular axial portion 21a fixed in an axial cylindrical surface 1a of the outer race 1, and a radial portion 21b extending towards the opposite inner race 2, 3 and supporting the gasket 22.
   The gasket 22 forms an axially outermost dust retainer lip 23 and a main lip 24 performing a radial sealing action. Contact of the main lip 24 with the rotating counterface 26 is ensured by a circumferential spring 27. According to the invention, the gasket 22 forms an elongate, flexible airtight lip 25 having an inner side 25a facing the inner ambient of the bearing that can be pressurized by supplying pressurized air through the passages 6, 7, and an opposite outer side 25b facing the rotating counterface 26.
   Preferably, the lip 25 is shaped in such manner that when the inner ambient of the bearing is not pressurized, this lip exerts a minimum or no contact pressure against the rotating counterface 26. As shown in the example of figures 2 and 3, the lip 25 can be so shaped and sized such that when the inner ambient is not pressurized, the outer side 25b is adjacent to or in floating contact with the counterface 26. In this first working condition, the main lip 24 performs a sealing action sufficient for containing the lubricant grease within the inner ambient of the bearing and prevent the access of external contaminants. This first condition is the one occurring
- always, if the vehicle is not equipped with an on-board system for controlling tire pressure;
- for most of the time, if the vehicle is provided with a system of the above mentioned type.

On the other hand, when the inner ambient is pressurized, the air pressure on the inner side 25a of the flexible lip 25 causes an increase of the contact pressure between the outer side 25b and the counterface 26, such that the flexible lip 25 performs an airtight sealing action. In this second working condition, the lip 25 confines laterally the pressurized air within the inner space or chamber of the bearing and cooperates in conveying the air from the inlet channel (6 or 7) towards the outlet channel (7 or 6), according to the direction of the air flow.

In the preferred embodiment shown in figures 2 and 3 the rotating counterface 26 is an axial cylindrical surface and the flexible lip 25 forms a cylindrical outer side 25b extending parallel to the surface 26, whereas the inner side 25a is curved and concave towards the centre of the bearing.

As will be appreciated from figure 2, the bearing unit has an axial size comparable to that of a standard bearing unit, i.e. intended for use on vehicles lacking an on-board inflating system. In other words, the invention reduces or eliminates the axial bulk conventionally taken up by the intermediate annular chamber designated 14 in figure 1. The two sets of rolling bodies 4, 5 can be disposed nearer to one another. Furthermore, a component is eliminated, as a single sealing device 20 is sufficient on each side of the bearing.

Owing to the lateral location of the airtight sealing devices, the radial channels 6, 7 can be formed in a median radial plane P (as shown in figure 2) intermediate the two sets of balls. As an alternative, said passages could be formed in laterally offset radial planes as indicated by the position of the broken line P', provided that these planes are comprises between the two lateral sealing devices.

In order to prevent the lubricant grease form leaking out of the pressurized chamber 30 through the channels 6 or 7, these can contain a porous material with pores of such a size to be permeable to the air but impermeable to grease. Alternatively or additionally, the channels 6, 7 can be shielded by applying a layer of such a porous material (not shown) on the radially inner and/or radially outer end portions of the channels.

Retaining cages for the rolling balls 4, 5 are indicated 28 in figure 2. In order to favour the direct air passage from the outer channels 6 to the inner channels 7 and vice versa, the cages 28 can have radial recesses or grooves 29 at their reciprocally opposed ends.

It is to be understood that the invention is not limited to the embodiment here described and illustrated which is to be considered as an exemplary implementation of the invention. Rather, the invention is likely to undergo modifications as to shape and location of parts, constructional and functional details. For example, those skilled in the art will recognize that, with some modifications, the invention is equally applicable to bearing units or hub-bearing units in which the rotatable race is radially outer and the stationary race is radially inner. Differently from what is shown in figures 2 and 3, the counterface 26 against which the lips 24 and 25 of the gasket 22 slide can be replaced by a conventional metal annular shield (known as "flinger") having a substantially L-shaped transversal cross-section. Finally, the channels 6, 7 will not necessarily have the radial orientation shown in the drawings. The invention is equally applicable also with bearing units having equivalent channels that open on one of the side faces of the races 1-3.

## Claims

1. A bearing unit for the hub of a motor vehicle wheel, comprising:
a stationary race (1) and at least one rotatable race (2, 3), each defining respective channels (6, 7) for the passage of pressurized air,
a plurality of rolling elements (4, 5) interposed between the stationary race and the rotatable race,
two sealing devices (20) mounted between the rotatable race and the stationary race and delimiting laterally a pressurizable annular chamber (30) communicating with the channels (6, 7) for the passage of pressurized air;
**characterized in that** the two sealing devices (20) are mounted at opposite lateral ends of the races (1, 2, 3) and each comprise at least one sealing lip (25) capable of performing airtight sealing action against a respective counterface surface (26) when the chamber (30) is pressurized.

2. A bearing unit according to claim 1, **characterized in that** each sealing device (20) comprises a sealing gasket (22) of elastic material fixed to one (1) of the races and having at least one first, axially outer main sealing lip (24) for sliding permanently against a surface (26) integral with the other race (2, 3), and
a second, flexible sealing lip (25) having an inner side (25a) facing the pressurizable chamber (30), and an outer, opposite side (25b) facing a counterface surface (26) integral with the other race (2, 3),
whereby when the chamber (30) is not pressurized, the second lip (25) exerts a minimum or no contact pressure against the counterface surface (26), and when the chamber (30) is pressurized, the air pressure acting on the inner side (25a) presses the outer side (25b) against the counterface surface (26) such that the flexible lip (25) performs a pressurized air sealing action.

3. A bearing unit according to claim 1, **characterized in that** the rolling elements comprise two axially adjacent sets of rolling elements (4, 5), and that no further sealing device is interposed between these two sets of rolling elements.

4. A bearing unit according to claim 2, **characterized in that** the second flexible lip (25) is an elongate flexible lip.

5. A bearing unit according to claim 4, **characterized in that** the outer side (25b) of the second lip (25) comprises an axial cylindrical portion extending parallel to an axial cylindrical surface (26) forming said counterface surface.

6. A bearing unit according to claim 4, **characterized in that** the inner side (25a) of the second lip comprises a curved surface concave towards the centre of the bearing.

7. A bearing unit according to claim 1, **characterized in that** the channels (6, 7) lie in one or more radial planes (P, P') axially comprised between the two lateral sealing devices (20).

8. A bearing unit according to claim 1, **characterized in that** the channels (6, 7) are associated with a porous material with pores of such a size to be permeable to the air but impermeable to the lubricant grease normally contained within the bearing unit.

9. A bearing unit according to claim 3, **characterized by** comprising two cages (28) for retaining the rolling elements (4, 5), the two cages having facing ends with radial grooves (29) for favouring a direct passage of pressurized air from the outer channels (6) to the inner channels (7), and vice versa.

10. A bearing unit according to claim 1, **characterized in that** the stationary race (1) is radially outer, and the rotatable race is radially inner and includes a pair of axially adjacent inner races (2, 3).

## Patentansprüche

1. Lagereinheit für die Nabe eines Kraftfahrzeugrads, die Folgendes umfasst:
einen feststehenden Ring (1) und mindestens einen drehbaren Ring (2, 3), wobei jeder jeweilige Kanäle (6, 7) für den Durchgang von Druckluft definiert;
mehrere zwischen dem feststehenden Ring und dem drehbaren Ring vorgesehene Rollenelemente (4, 5);
zwei zwischen dem drehbaren Ring und dem feststehenden Ring montierte Dichtungsvorrichtungen (20), die seitlich eine druckbeaufschlagbare ringförmige Kammer (30) begrenzen, die mit den Kanälen (6, 7) für den Durchgang von Druckluft in Verbindung steht,
**dadurch gekennzeichnet, dass** die zwei Dichtungsvorrichtungen (20) an gegenüberliegenden seitlichen Enden der Ringe (1, 2, 3) montiert sind und jeweils mindestens eine Dichtungslippe (25) umfassen, die eine luftdichte Abdichtung gegenüber einer jeweiligen Gegenfläche (26) bewirkt, wenn die Kammer (30) druckbeaufschlagt ist.

2. Lagereinheit nach Anspruch 1, **dadurch gekennzeichnet, dass** jede Dichtungsvorrichtung (20) eine Dichtung (22) aus elastischem Material umfasst, die an einem (1) der Ringe fixiert ist und mindestens eine erste, axial äußere Hauptdichtungslippe (24) aufweist, die permanent an einer integral mit dem anderen Ring (2, 3) ausgebildeten Oberfläche (26) gleiten kann, und
eine zweite, flexible Dichtungslippe (25) aufweist, die eine der druckbeaufschlagbaren Kammer (30) zugewandte innere Seite (25a) sowie eine äußere, gegenüberliegende Seite (25b) hat, die einer integral mit dem anderen Ring (2, 3) ausgebildeten Gegenfläche (26) zugewandt ist,
wobei, wenn die Kammer (30) nicht druckbeaufschlagt ist, die zweite Lippe (25) einen minimalen oder kontaktlosen Druck gegen die Gegenfläche (26) ausübt, und, wenn die Kammer (30) druckbeaufschlagt ist, der auf die innere Seite (25a) einwirkende Luftdruck die äußere Seite (25b) so gegen die Gegenfläche (26) drückt, dass die flexible Lippe (25) eine Druckluftabdichtung bewirkt.

3. Lagereinheit nach Anspruch 1, **dadurch gekennzeichnet, dass** die Rollenelemente zwei axial angrenzende Sätze von Rollenelementen (4, 5) umfassen und dass keine weitere Dichtungsvorrichtung zwischen diesen zwei Sätzen von Rollenelementen vorgesehen ist.

4. Lagereinheit nach Anspruch 2, **dadurch gekennzeichnet, dass** die zweite flexible Lippe (25) eine längliche flexible Lippe ist.

5. Lagereinheit nach Anspruch 4, **dadurch gekennzeichnet, dass** die äußere Seite (25b) der zweiten Lippe (25) einen axialen zylindrischen Abschnitt umfasst, der sich parallel zu einer die Gegenfläche bildenden axialen zylindrischen Oberfläche (26) erstreckt.

6. Lagereinheit nach Anspruch 4, **dadurch gekennzeichnet, dass** die innere Seite (25a) der zweiten Lippe eine zum Zentrum des Lagers hin konkav ausgebildete gebogene Oberfläche umfasst.

7. Lagereinheit nach Anspruch 1, **dadurch gekennzeichnet, dass** die Kanäle (6, 7) in einer oder mehreren radialen Ebenen (P, P') liegen, die axial zwischen den zwei seitlichen Dichtungsvorrichtungen (20) eingeschlossen sind.

8. Lagereinheit nach Anspruch 1, **dadurch gekennzeichnet, dass** den Kanälen (6, 7) ein poröses Material mit Poren in einer solchen Größe zugeordnet ist, dass sie für die Luft durchlässig, jedoch für das normalerweise innerhalb der Lagereinheit enthaltene Schmierfett undurchlässig sind.

9. Lagereinheit nach Anspruch 3, **dadurch gekennzeichnet, dass** sie zwei Käfige (28) zum Zurückhalten der Rollenelemente (4, 5) umfasst, wobei die zwei Käfige zugewandte Enden mit radialen Nuten (29) aufweisen, um einen direkten Durchgang von Druckluft von den äußeren Kanälen (6) zu den inneren Kanälen (7) sowie umgekehrt zu begünstigen.

10. Lagereinheit nach Anspruch 1, **dadurch gekennzeichnet, dass** der feststehende Ring (1) radial außen vorgesehen ist und der drehbare Ring radial innen vorgesehen ist und ein Paar axial angrenzende innere Ringe (2, 3) beinhaltet.

## Revendications

1. Unité de roulement pour le moyeu d'une roue de véhicule, comprenant :
une bague stationnaire (1) et au moins une bague rotative (2, 3), définissant chacune des canaux respectifs (6, 7), pour permettre le passage d'air pressurisé,
une pluralité d'éléments de roulement (4, 5) interposés entre la bague stationnaire et la bague rotative,
deux dispositifs d'étanchéité (20) montés entre la bague rotative et la bague stationnaire et délimitant latéralement une chambre annulaire préssurisable (30) en communication avec les canaux (6, 7) pour permettre le passage d'air pressurisé ;
**caractérisée en ce que** les deux dispositifs d'étanchéité (20) sont montés aux extrémités latérales opposées des bagues (1, 2, 3) et qu'ils comprennent chacun au moins une lèvre d'étanchéité (25) capable d'accomplir une action de scellement étanche à l'air par le contact sur la contre-surface respective (26) quand la chambre (30) est pressurisée.

2. Unité de roulement selon la revendication 1, **caractérisée en ce que** chaque dispositif d'étanchéité (20) comprend un joint d'étanchéité (22) en matériau élastique fixé à une (1) des bagues et comprenant au moins une première lèvre d'étanchéité principale axialement extérieure (24) pour glisser en permanence contre une surface (26) intégrale à l'autre bague (2, 3), et une deuxième lèvre d'étanchéité flexible (25) comportant un côté intérieur (25a) face à la chambre préssurisable (30) et un côté opposé, extérieur (25b), face à la contre-surface (26) intégrale à l'autre bague (2, 3),
ce par quoi, quand la chambre (30) n'est pas pressurisée, la deuxième lèvre (25) n'exerce qu'une pression minimale ou aucune pression de contact sur la contre-surface (26), et quand la chambre (30) est pressurisée, la pression d'air agissant sur le côté intérieur (25a) presse le côté extérieur (25b) en contact sur la contre-surface (26) de telle manière que la lèvre flexible (25) accomplit une action de scellement étanche à l'air.

3. Unité de roulement selon la revendication 1, **caractérisée en ce que** les éléments de roulement comprennent deux jeux d'éléments de roulement (4, 5) axialement adjacents, et qu'aucun autre dispositif d'étanchéité n'est interposé entre ces deux jeux d'éléments de roulement.

4. Unité de roulement selon la revendication 2, **caractérisée en ce que** la deuxième lèvre flexible (25) est une lèvre flexible allongée.

5. Unité de roulement selon la revendication 4, **caractérisée en ce que** l'autre côté (25b) de la deuxième lèvre (25) comprend une partie cylindrique axiale s'étendant parallèlement à une surface cylindrique axiale (26) formant ladite contre-surface.

6. Unité de roulement selon la revendication 4, **caractérisée en ce que** le côté intérieur (25a) de la deuxième lèvre comprend une surface incurvée, concave vers le centre du roulement.

7. Unité de roulement selon la revendication 1, **caractérisée en ce que** les canaux (6, 7) sont couchés dans un ou plusieurs plans radiaux (P, P') compris axialement entre les deux dispositifs d'étanchéité latéraux (20).

8. Unité de roulement selon la revendication 1, **caractérisée en ce que** les canaux (6, 7) sont associés à un matériau poreux dont les pores ont une dimension qui les rends perméables à l'air mais imperméables à la graisse lubrifiante contenue normalement dans l'unité de roulement.

9. Unité de roulement selon la revendication 3, **caractérisée par le fait qu'**elle comprend deux cages (28) pour retenir les éléments de roulement (4, 5), les deux cages ayant des extrémités faisant face aux gorge radiales (29) pour favoriser un passage direct de l'air pressurisé des canaux extérieurs (6) vers les canaux intérieurs (7), et vice versa.

10. Unité de roulement selon la revendication 1, **caractérisée en ce que** la bague stationnaire (1) est radialement extérieure, et que la bague rotative est radialement intérieure et qu'elle comprend une paire de bagues intérieures axialement adjacentes (2, 3).
